# DEMANDE DE BREVET EUROPEEN

(11) **EP 3 871 747 A1**
(43) Date de publication de la demande: **01.09.2021**
(21) Numéro de dépôt: 21156399.4
(22) Date de dépôt: 10.02.2021
(51) Int. Cl.: B01D 17/04, B01F 17/00, C09K 8/584, C09K 8/58

(54) **DISPOSITIF ET PROCÉDÉ DE SÉPARATION DE DEUX LIQUIDES NON MISCIBLES AU MOYEN D'UNE PHASE BICONTINUE**

(30) Priorité: 26.02.2020 FR 2001858
(71) Demandeur: IFP Energies nouvelles, 92500 Rueil-Malmaison (FR)
(72) Inventeur: AYOUB, Elie, 92852 Rueil-Malmaison Cédex (FR); FROT, Didier, 92852 Rueil-Malmaison Cédex (FR)
(74) Mandataire: IFP Energies nouvelles

(57) **Abrégé**

L'invention concerne un dispositif et un procédé de séparation de deux fluides non miscibles (2, 3), pour lesquels on forme un système triphasique avec une phase bicontinue de type Winsor III (4), de manière à phagocyter les petites gouttes dispersées et à produire un liquide (2) dépourvu de petites gouttes.

## Description

### Domaine technique

La présente invention concerne le domaine de la séparation de deux liquides non miscibles. Plus particulièrement, la présente invention concerne la séparation de gouttes dispersées d'un liquide présentes dans un autre liquide, notamment pour le traitement d'un effluent organique ou aqueux.

Dans différents procédés physico-chimiques liquide-liquide en présence d'une émulsion de petites gouttes dispersées voire une microémulsion, il est important de séparer les phases, afin de pouvoir exploiter les deux liquides « propres ».

Un exemple d'un tel procédé est le traitement de l'eau issue de la récupération assistée des hydrocarbures. Jusqu'à peu, l'exploitation d'un champ pétrolifère dit conventionnel se déroulait couramment en deux étapes : une première étape de récupération primaire uniquement basée sur la surpression présente au sein du réservoir, suivie d'une seconde étape utilisant généralement le procédé de « waterflooding » (balayage à l'eau). Ce procédé consiste à injecter de l'eau dans la formation souterraine afin de compenser la chute de pression au sein du réservoir, et donc remobiliser l'huile en place. Cette eau, ainsi que l'eau qui peut être initialement contenue dans la formation souterraine se retrouve dans les effluents pétroliers. Il est donc nécessaire de traiter ces effluents pétroliers de manière à récupérer uniquement les hydrocarbures. La première étape du traitement des effluents pétroliers consiste généralement à séparer l'eau et l'huile de façon gravitaire (par exemple au moyen d'un procédé de « Free-Water Knock-Out »). L'huile ainsi récupérée est dirigée vers des procédés de désalinisation et de déshydratation. De plus, l'eau séparée de l'huile n'est pas complètement propre (le procédé de séparation gravitaire n'est pas parfait) : elle contient notamment des gouttes d'huile et des impuretés. Pour retirer ces impuretés et les gouttes d'huile, l'eau est dirigée vers des procédés de traitement de l'eau, notamment des procédés de déshuilage. A l'issue des procédés de traitement de l'eau, la qualité de l'eau doit être suffisante pour répondre aux normes légales ou adaptée pour la réinjection dans la formation souterraine.

Actuellement, les pétroliers cherchent à optimiser la récupération des hydrocarbures. Cela peut être effectué en diminuant la saturation résiduelle en huile obtenue à l'issue du procédé de waterflooding, qui est, en moyenne, de 65 % pour les réservoirs préférentiellement mouillables à l'eau. Pour répondre à cet objectif, de nouveaux procédés, appelés récupération tertiaire par voie chimique (ou Chemical Enhanced Oil Recovery, cEOR pour récupération assistée des hydrocarbures par voie chimique), sont développés. Ces procédés sont basés sur l'ajout d'additifs dans l'eau injectée pour le balayage tels que des polymères, des tensioactifs, des alcalins ou une combinaison de ces additifs. Or, après percolation de cette solution jusqu'au puits producteur, il a été démontré que les propriétés de l'effluent produit en tête de puits sont modifiées par les additifs (polymères, tensioactifs et/ou alcalins), rendant les procédés de séparation moins efficaces, notamment en raison des dimensions des gouttes.

### Technique antérieure

Afin de séparer deux liquides non miscibles, on peut utiliser notamment le phénomène de coalescence sous l'effet de la gravité ou d'une gravité augmentée, par exemple dans le cas de séparateurs tournants comme des hydrocyclones, tels que décrits notamment dans les demandes de brevet WO 2017/123095 et US 2014/0124437.

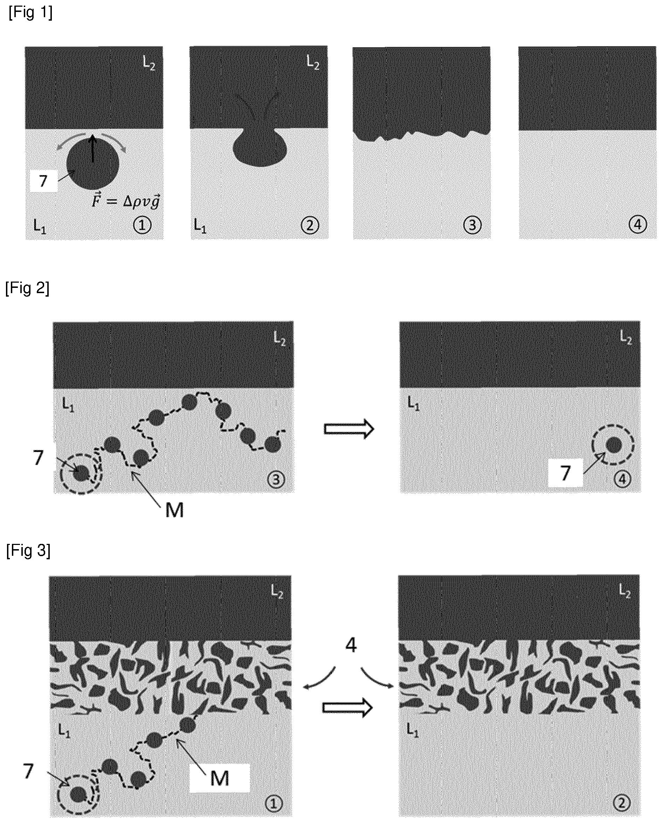

La coalescence est le phénomène par lequel deux substances identiques (notamment les deux liquides), mais dispersées, ont tendance à se réunir. La figure 1 illustre, schématiquement, le phénomène de coalescence dans le cas d'une goutte 7 présente dans le liquide L1, la goutte 7 étant de même nature que le liquide L2. Dans un premier temps (figure de gauche), la goutte 7, soumise à une force, se déplace vers l'interface correspondant à sa nature physique ; c'est le processus de crémage ou de sédimentation. La goutte 7 est soumise à une force F qui vaut *F̅ =* Δ*ρνg̅* avec g la gravité, v le volume de la goutte 7 et Δρ la différence de masse volumique entre la goutte dispersée 7 et la phase continue L₁. Ensuite (deuxième figure en partant de la gauche), l'hydrodynamique qu'il faut considérer a changé et il faut drainer le film du liquide L1, dans lequel se meut la goutte 7. Enfin (troisième figure en partant de la gauche), la rupture du film de liquide L1 se produit, et la goutte 7 se vide dans une phase continue de même nature, ici le liquide L2. Il se forme alors (troisième figure en partant de la gauche) une interface perturbée. Puis, au bout d'un certain temps (figure de droite), l'interface revient à l'équilibre pour définir un plan. Ce phénomène de coalescence est valide pour des gouttes assez grosses (de diamètre supérieur ou égal à 1 µm).

Pour des gouttes plus petites, le crémage ne se fait plus car la goutte s'éloigne plus rapidement de tout point de l'espace, sous l'effet de la diffusion brownienne, qu'elle ne se dirige vers la phase de même nature qu'elle. Dans la suite de la description, on appelle petites gouttes, des gouttes de diamètre inférieur ou égal à 100 nm et celles des microémulsions. En outre, l'énergie nécessaire pour réaliser la rupture du film du liquide est plus importante. La figure 2 illustre ce phénomène, une petite goutte 7, de même nature que le liquide L2, qui est soumis à un mouvement M de type diffusion brownienne, ne va pas s'intégrer dans le liquide L2, car bien qu'elle se rapproche de l'interface, elle n'y séjourne pas suffisamment longtemps pour drainer le film de liquide qui la sépare de la phase continue dans laquelle elle pourrait coalescer. La figure de droite illustre la situation finale, dans laquelle la petite goutte 7 reste disjointe du liquide L2.

Il en résulte que le phénomène de coalescence ne peut être mis en œuvre pour des petites gouttes. Il est donc nécessaire d'utiliser d'autres phénomènes physico-chimiques pour réaliser la séparation des petites gouttes. En outre, la mise en œuvre du phénomène de gravité augmentée est complexe et onéreuse.

### Résumé de l'invention

La présente invention a pour but de réaliser la séparation de petites gouttes dispersées (gouttes de diamètre inférieur ou égal à 100 nm et celles des microémulsions) d'un liquide présentes dans un autre liquide, les deux liquides étant non miscibles. Pour cela, l'invention concerne un dispositif et un procédé de séparation de deux fluides non miscibles, pour lesquels on forme un système triphasique avec une phase bicontinue de type Winsor III, de manière à phagocyter les petites gouttes dispersées et à produire un liquide dépourvu de petites gouttes.

L'invention concerne un dispositif de séparation de deux liquides non miscibles, appelés premier liquide et deuxième liquide, ledit dispositif comprenant un contenant comportant lesdits premier et deuxième liquides, des moyens d'injection d'un fluide qui est formé dudit premier liquide et qui comporte des gouttes dudit deuxième liquide, et des moyens de soutirage dudit premier liquide dépourvu de gouttes dudit deuxième liquide. Ledit contenant comprend un système triphasique, ledit système triphasique comprenant ledit premier liquide, ledit deuxième liquide et une phase bicontinue de type Winsor III formée au moyen d'une formulation tensioactive, pour réaliser un phagocytage desdites gouttes dispersées dudit deuxième liquide présentes dans ledit premier liquide.
Selon un mode de réalisation, ledit dispositif de séparation comprend des moyens de mesure optique d'au moins ledit premier liquide au sein dudit contenant.
De préférence, lesdits moyens de mesure optique réalisent une mesure de l'intensité lumineuse diffusée dans ledit contenant.

Conformément à une mise en œuvre, lesdits moyens d'injection dudit fluide formé dudit premier liquide et desdites gouttes dudit deuxième liquide, et lesdits moyens de soutirage dudit premier liquide comportent des vannes.

De manière avantageuse, ledit dispositif de séparation comprend des moyens de commande desdites vannes.

Selon un aspect, ledit premier liquide est une phase aqueuse et ledit deuxième liquide est une phase organique.

De plus, l'invention concerne un procédé de séparation de deux liquides non miscibles appelés premier liquide et deuxième liquide, dans lequel on met en œuvre les étapes suivantes :
a) On forme un système triphasique dans un contenant, ledit système triphasique comprenant ledit premier liquide, ledit deuxième liquide et une phase bicontinue de type Winsor III formée au moyen d'une formulation tensioactive ;
b) On injecte dans le contenant un fluide qui est formé dudit premier liquide et qui comporte des gouttes dudit deuxième liquide ;
c) On réalise un phagocytage desdites gouttes dudit deuxième liquide dans ladite phase bicontinue ; et
d) On soutire dudit contenant ledit premier liquide dépourvu de gouttes dudit deuxième liquide.

Avantageusement, ledit procédé comprend une étape de mesure optique d'au moins ledit premier liquide au sein dudit contenant, notamment une mesure optique de l'intensité lumineuse diffusée dans ledit contenant.

Selon une variante, on soutire ledit premier liquide lorsque ladite mesure optique ne détecte aucune goutte du deuxième liquide dans ledit premier liquide.

Alternativement, on soutire ledit premier liquide après une durée prédéterminée après l'étape d'injection.

Conformément à un mode de réalisation, on commande automatiquement l'injection dudit fluide qui est formé dudit premier liquide et comportant des gouttes dudit deuxième liquide dans ledit contenant et/ou le soutirage dudit premier liquide dépourvu de goutte du deuxième liquide depuis ledit contenant.

Selon une caractéristique, ledit procédé de séparation comporte une étape d'injection dans ledit contenant d'une formulation tensioactive qui minimise la tension interfaciale entre ledit premier liquide et ledit deuxième liquide.

Avantageusement, ledit premier liquide est une phase aqueuse et ledit deuxième liquide est une phase organique.

En outre l'invention concerne l'utilisation du dispositif de séparation selon l'une des caractéristiques précédentes et/ou du procédé de séparation selon l'une des caractéristiques précédentes dans un procédé de traitement d'un effluent pétrolier, ledit effluent pétrolier étant de préférence obtenu par récupération assistée des hydrocarbures.

D'autres caractéristiques et avantages du procédé selon l'invention, apparaîtront à la lecture de la description ci-après d'exemples non limitatifs de réalisations, en se référant aux figures annexées et décrites ci-après.

### Liste des figures

La figure 1, déjà décrite, illustre les étapes du phénomène de coalescence.
La figure 2, déjà décrite, illustre le mouvement de type diffusion brownienne d'une goutte dans le premier liquide à proximité d'une interface liquide-liquide.
La figure 3 illustre l'évolution des phases dans le contenant lorsqu'on fait varier le paramètre physico-chimique.
La figure 4 illustre le mouvement de type diffusion brownienne d'une goutte dans le premier liquide à proximité d'une interface liquide - phase bicontinue du type Winsor III.
La figure 5 illustre le dispositif de séparation selon un mode de réalisation de l'invention, pour trois instants distincts.
La figure 6 illustre les moyens de mesure optique du dispositif selon un mode de réalisation de l'invention, pour un exemple dans lequel le premier liquide comporte des gouttes dispersées du deuxième liquide.
La figure 7 illustre les moyens de mesure optique du dispositif selon un mode de réalisation de l'invention, pour lequel un exemple dans lequel le premier liquide ne comporte aucune goutte dispersée du deuxième liquide.

### Description des modes de réalisation

La présente invention concerne un dispositif et un procédé de séparation de deux liquides non miscibles (appelés premier et deuxième liquides), un des deux liquides comportant initialement des gouttes dispersées de l'autre liquide, notamment sous forme de micro-gouttes ou de micro-émulsions. Le dispositif et le procédé selon l'invention mettent en œuvre le phénomène de phagocytage des gouttes dispersées dans une phase bicontinue de type Winsor III. Cette phase bicontinue est réalisée au moyen d'une formulation tensioactive optimisée dont le but est de minimiser la tension interfaciale entre les deux liquides. Pour cela, la formulation tensioactive est prédéterminée en fonction des deux liquides, en particulier on peut prédéterminer un paramètre physico-chimique optimisé de la formulation tensioactive qui réalise cette minimisation de la tension interfaciale. Le paramètre physico-chimique est un paramètre de la formulation tensioactive que l'on peut faire varier, et qui a une influence sur la tension interfaciale entre les deux liquides. De manière non limitative, le paramètre physico-chimique peut être la salinité (par exemple la salinité en NaCI), la température, la pression, l'emploi d'un co-solvant (par exemple un alcool), etc.

De préférence, le premier liquide peut être une phase aqueuse et le deuxième liquide peut être une phase organique, c'est-à-dire une huile, par exemple une huile issue d'une exploitation d'une formation souterraine. Cette mise en œuvre est particulièrement adaptée à la séparation des phases d'un effluent pétrolier, en particulier un effluent pétrolier obtenu par récupération assistée des hydrocarbures (EOR).

Alternativement, les deux liquides peuvent être de tous types. Par exemple, le premier liquide peut être une phase organique et le deuxième liquide peut être une phase aqueuse. Cette mise en œuvre est particulièrement adaptée pour diminuer la présence d'eau dans de l'huile, pour en diminuer la salinité (dessaler une phase organique), et pour notamment limiter le risque de création d'hydrates.

La figure 3 illustre, schématiquement, différents états dans lequel se trouvent deux liquides non miscibles en présence d'une formulation tensioactive, en faisant varier un paramètre P physico-chimique de la formulation tensioactive (la variation du paramètre P représentée par la flèche horizontale, est strictement croissante ou décroissante). Sur cette figure, sont représentés cinq contenants 1, par exemple des tubes à essai, dans lesquels sont représentés deux liquides, respectivement le premier liquide 2, et le deuxième liquide 3. Dans ces contenants 1, on injecte aussi la formulation tensioactive.

Pour le premier contenant 1 (en partant de la gauche), avec une première valeur du paramètre physico-chimique P, on observe des gouttes 5 dispersées du deuxième liquide au sein du premier liquide 2. Il s'agit d'une microémulsion du type Winsor I W1.

Pour le deuxième contenant (en partant de la gauche), avec une deuxième valeur du paramètre physico-chimique P, on observe toujours des gouttes 5 dispersées du deuxième liquide au sein du premier liquide 2 mais en moins grande quantité, ainsi que la création d'une nouvelle phase 4. Il s'agit d'une phase bi-continue (qui comporte à la fois le premier liquide et le deuxième liquide). Cette phase bi-continue est du type Winsor III W3. Le type Winsor III désigne un système triphasique dans lequel une phase intermédiaire riche en surfactant (tensioactif) se forme entre les deux liquides. Cette microémulsion est formée de feuillets des premier et deuxième liquides intriqués, sans micelles ni phase continue prépondérante.

Pour le troisième contenant (en partant de la gauche), avec une troisième valeur du paramètre physico-chimique P, on n'observe aucune goutte dispersée du deuxième liquide au sein du premier liquide 2, et une augmentation du volume de la phase bi-continue 4 de type Winsor III W3.

Pour le quatrième contenant (en partant de la gauche), avec une quatrième valeur du paramètre physico-chimique P, on n'observe aucune goutte dispersée du deuxième liquide au sein du premier liquide 2, une réduction de la phase bi-continue de type Winsor III W3. En revanche, on observe la formation de gouttes 6 dispersées du premier liquide au sein du deuxième liquide 3.

Pour le cinquième contenant (en partant de la gauche), avec une cinquième valeur du paramètre physico-chimique P, on n'observe aucune goutte dispersée du deuxième liquide au sein du premier liquide 2, une disparition de la phase bi-continue de type Winsor III, et une augmentation du nombre de gouttes 6 dispersées du premier liquide au sein du deuxième liquide 3. Il s'agit d'une microémulsion du type Winsor II W2.

Ainsi, en faisant varier le paramètre physico-chimique P, on passe d'une émulsion Winsor I à une émulsion Winsor II, en passant par l'apparition et la disparition d'une phase bi-continue de type Winsoir III. Le paramètre physico-chimique optimal (en termes de minimisation de la tension interfaciale entre les deux liquides) est le paramètre P* (contenant au centre), il correspond au cas où aucune goutte n'est présente dans le premier liquide et aucune goutte n'est présente dans le deuxième liquide. C'est cette formulation tensioactive avec le paramètre P* qui est mis en œuvre dans le dispositif et le procédé selon l'invention. Les documents suivants décrivent la formation d'une telle phase bi-continue :
Jean-Louis SALAGER, Raquel ANTÓN, José Maria ANDÉREZ, Jean-Marie AUBRY, Formulation des microémulsions par la méthode du HLD, Techniques de l'Ingénieur, 2001, Vol. Génie des Procédés J2, Chapter 157, 1-20

Fukumoto, Ayako, Dalmazzone, Christine, Frot, Didier, Barré, Loïc, Noïk, Christine, Investigation on Physical Properties and Morphologies of Microemulsions formed with Sodium Dodecyl Benzenesulfonate, Isobutanol, Brine, and Decane, Using Several Experimental Techniques, Energy & Fuels 2016 v.30 no.6 pp. 4690-4698.

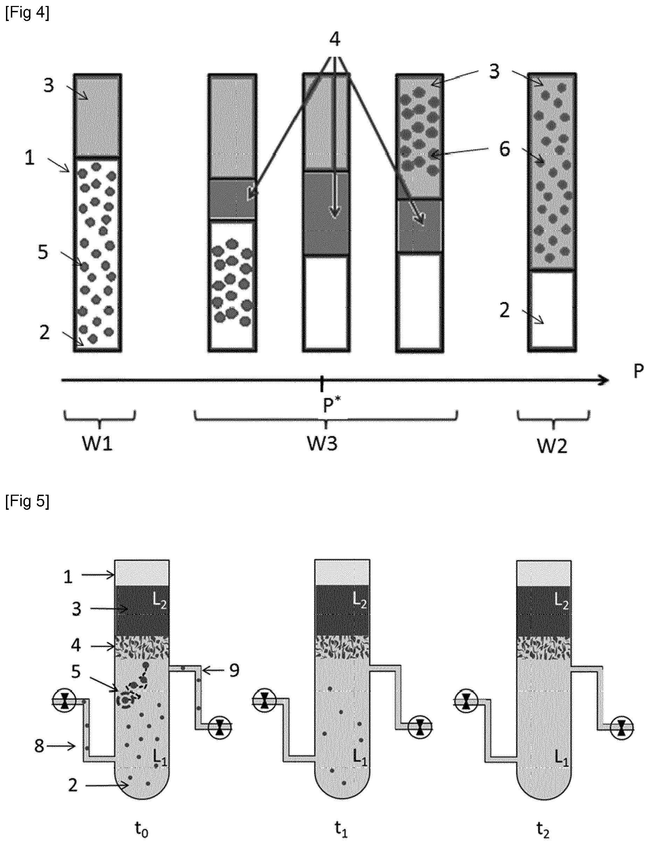

Le phagocytage concerne le captage par la phase bi-continue des petites gouttes présentes dans le premier liquide. Etant donné que la phase bi-continue comprend les deux liquides, la goutte de petite taille, soumise à un mouvement de diffusion brownienne, se rapproche de la phase bi-continue, et est captée par la phase bi-continue (il n'existe pas de film de liquide à traverser). La figure 4 illustre ce phénomène, une petite goutte 7, de même nature que le liquide L2 est soumise à un mouvement M de type diffusion brownienne. Etant donné qu'une phase bi-continue 4 est formée entre le liquide L1 et le liquide L2, il se produit le phénomène de phagocytage. Ainsi, en situation finale (figure de droite), la petite goutte 7 est incluse dans la phase bi-continue 4. C'est ce phénomène qui est mis en œuvre dans le dispositif et le procédé selon l'invention.

Le dispositif de séparation selon l'invention comprend :
- Un contenant, qui comprend les premier et deuxième liquides et une formulation tensioactive, de manière à former un système triphasique comprenant le premier liquide, le deuxième liquide, et une phase bicontinue de type Winsor III ;
- Des moyens d'injection d'un fluide qui est formé du premier liquide et qui comporte des gouttes dispersées du deuxième liquide, les moyens d'injection sont prévus pour ajouter le fluide comprenant du premier liquide avec des gouttes dispersées du deuxième liquide dans le contenant, les moyens d'injection peuvent comprendre une conduite d'injection ; et
- Des moyens de soutirage du premier liquide dépourvu de goutte du deuxième liquide depuis le contenant, les moyens de soutirage peuvent comprendre une conduite de soutirage.

Au sein du contenant, le phénomène de phagocytage dans la phase bi-continue se produit, et ainsi les gouttes dispersées du deuxième liquide sont piégées dans la phase bi-continue, ce qui permet d'obtenir un premier liquide dépourvu de goutte du deuxième liquide. Préférentiellement, le dispositif peut ne pas comporter de moyens d'injection du deuxième liquide, ni de moyens d'injection de la formulation tensioactive, lorsque le système triphasique est formé : seule la phase du premier liquide varie au sein du contenant pendant son utilisation.

De préférence, afin de favoriser le phagocytage des gouttes, le deuxième liquide peut être de même nature que les gouttes présentes dans le fluide injecté.

Avantageusement, les moyens d'injection du fluide qui est formé du premier liquide et comportant des gouttes du deuxième liquide peuvent être arrangés dans la partie inférieure du contenant (dans sa position de fonctionnement) de manière à injecter le premier liquide dans la phase du premier liquide déjà présent dans le contenant.

De manière avantageuse, les moyens de soutirage du premier liquide peuvent être arrangés dans la partie inférieure du contenant (dans sa position de fonctionnement) de manière à soutirer uniquement le premier liquide dans la phase du premier liquide présent dans le contenant.

Le contenant peut avoir toute forme. Selon un exemple de réalisation, il peut avoir la forme d'une colonne de section circulaire, rectangulaire, etc.

Selon un mode de réalisation de l'invention, le dispositif de séparation peut comprendre des moyens de mesure optique d'au moins le premier liquide au sein du contenant. Les moyens de mesure optique permettent de déterminer la présence de gouttes dispersées dans le premier liquide, et ainsi permettent de s'assurer de réaliser le soutirage du premier liquide dépourvu de gouttes du deuxième liquide.

En outre, le dispositif peut comporter des seconds moyens de mesure optique du deuxième liquide au sein du contenant pour déterminer la présence de gouttes dispersées du premier liquide au sein du deuxième liquide. Les moyens de mesure optique peuvent être identiques pour les deux mesures.

Conformément à une mise en œuvre de l'invention, on peut réaliser la mesure optique par analyse de l'intensité lumineuse diffusée par le premier liquide (respectivement le deuxième liquide) dans le contenant. En effet, l'intensité lumineuse diffusée varie de manière importante avec la présence ou l'absence de gouttes dans le premier liquide (respectivement dans le deuxième liquide), en particulier lorsque le premier liquide est une phase aqueuse. Selon une option de réalisation de cette mise en œuvre, on peut utiliser la méthode DL (Diffusion de Lumière). Cette méthode DL permet la détection de petites gouttes dispersées. Alternativement, d'autres méthodes peuvent être appliquées, comme la mesure de l'intensité lumineuse absorbée ou transmise.

De préférence, le contenant peut être transparent afin de réaliser les mesures optiques, il peut être par exemple en verre ou en quartz.

Pour contrôler l'injection du premier liquide dans le contenant, les moyens d'injection du premier liquide peuvent comporter au moins une vanne.

Pour contrôler le soutirage du premier liquide depuis le contenant, les moyens de soutirage peuvent comporter au moins une vanne.

Dans le cas pour lequel les moyens d'injection et les moyens de soutirage comprennent au moins une vanne, le dispositif selon l'invention peut comporter des moyens de commande des vannes. Ainsi, l'injection et le soutirage du premier liquide peuvent être réalisés automatiquement. Les moyens de commande peuvent être des moyens informatiques, tels qu'un ordinateur.

Pour ce mode de réalisation (avec des moyens de commande des vannes), et pour le cas où le dispositif comporte des moyens de mesure optique du premier liquide au sein du contenant, les moyens de commande peuvent être aptes à réaliser automatiquement les étapes suivantes :
- Ouvrir la vanne des moyens de soutirage lorsqu'aucune goutte du deuxième liquide n'est détectée par les moyens de mesure optique dans le premier liquide afin de soutirer le premier liquide dépourvu de gouttes du deuxième liquide, la vanne des moyens d'injection étant fermée, puis
- Fermer la vanne des moyens de soutirage à la fin du soutirage, puis
- Ouvrir la vanne des moyens d'injection pour injecter un fluide comprenant le premier liquide et des gouttes dispersées du deuxième liquide dans le contenant, la vanne des moyens de soutirage restant fermée, puis
- Fermer la vanne des moyens d'injection lorsque la quantité de premier liquide dans le contenant est suffisante, la vanne des moyens de soutirage restant fermée.

Lorsque les deux vannes sont fermées, le phénomène de phagocytage est mis en œuvre, et les moyens de commande ne réalisent aucune action jusqu'à ce que les moyens optiques ne détectent plus aucune goutte dans le premier liquide.

En variante, au lieu de commander les vannes en fonction de la détection optique de gouttes, les moyens de commande peuvent commander les vannes (par exemple selon la séquence d'ouverture et fermeture des vannes décrite ci-dessus) au bout d'un temps prédéterminé de phagocytage.

Conformément à une mise en œuvre de l'invention, le dispositif peut comprendre un bain liquide transparent (selon un exemple non limitatif le bain liquide peut comprendre de l'eau) dans lequel le contenant peut être plongé, la température du bain liquide pouvant être contrôlée par des moyens de contrôle de la température du bain liquide. Ainsi, il est possible de régler la température (« thermostater ») du contenu du contenant. De cette manière, il s'agit d'un moyen simple qui permet de minimiser les gradients de température dans le contenant (meilleure homogénéisation de la température au sein du contenant). En outre, pour le mode de réalisation pour lequel le contenant est en verre, l'interface verre-liquide présente l'avantage de minimiser l'écart d'indice de réfraction, donc de réduire les réflexions et diffusions parasites (notamment pour le cas des contenants usagés), ce qui favorise la mesure optique et par conséquent la détection de la présence, ou non, de gouttes. Ce mode de réalisation permet en outre d'utiliser des contenants ayant un grade de qualité optique non maximale, ce qui permet de réduire les coûts.

La figure 5 illustre, schématiquement et de manière non limitative, le dispositif de séparation selon un mode de réalisation de l'invention. Sur cette figure, on représente le dispositif à trois instants : t₀ (figure de gauche) pendant l'injection du fluide comprenant le premier liquide et des gouttes dispersées du deuxième liquide, t₁ (figure centrale) pendant le phénomène de phagocytage, et t₂ (figure de droite) pendant le soutirage du premier liquide dépourvu de gouttes du deuxième liquide.

Le dispositif de séparation comporte un contenant 1, dans lequel sont représentés deux liquides, respectivement le premier liquide 2, et le deuxième liquide 3. Dans ces contenants 1, on injecte aussi la formulation tensioactive, pour former une phase bi-continue 4 de type Winsor III. Le dispositif de séparation comprend également une conduite 8 d'injection de fluide et une conduite 9 de soutirage du premier liquide. Les conduites 8 et 9 sont situées dans la partie inférieure du contenant 1 dans sa position de fonctionnement.

A t₀, on injecte un fluide par la conduite 8 d'injection. Le fluide comprend le premier liquide 2 et des gouttes dispersées du deuxième liquide 5. Ainsi, le contenant 1 comprend dans la phase du premier liquide 2 des gouttes dispersées 5 du deuxième liquide.

A t₁, les gouttes dispersées 5 sont en train d'être phagocytés par la phase bi-continue 4, en raison des conditions (présence de tensioactif, paramètre physico-chimique optimal, etc.) au sein du contenant 1. On observe moins de gouttes à l'instant t1 qu'à l'instant t0.

A t₂, toutes les gouttes 5 ont été phagocytées par la phase bi-continue 4. On peut donc soutirer par la conduite 9 de soutirage le premier liquide 2 dépourvu de goutte 5 du deuxième liquide.

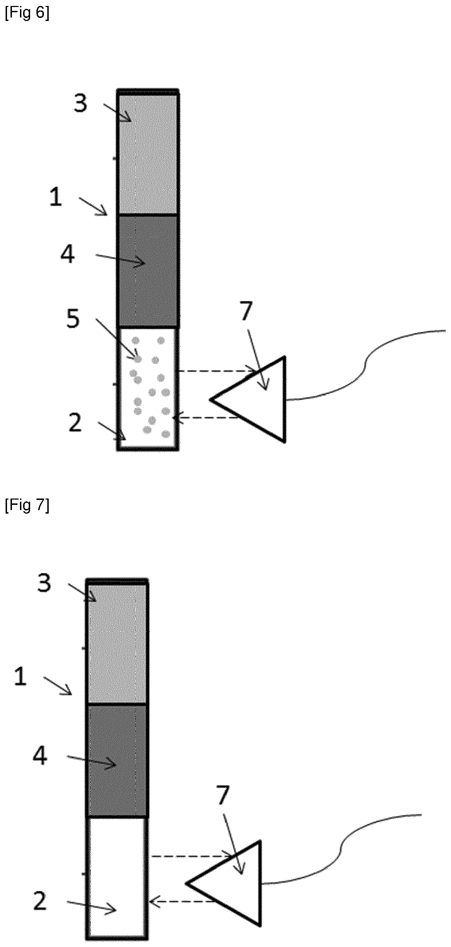

Les figures 6 et 7 illustrent, schématiquement et de manière non limitative, le dispositif selon un mode de réalisation de l'invention, pour lequel le dispositif de séparation comporte des moyens de mesure optique. Le dispositif comporte un contenant 1, et des moyens de mesures optiques 7. Sur ces figures, les moyens de mesures optiques 7 sont représentés en un seul élément, alternativement, ils peuvent comprendre deux éléments distincts : une source lumineuse et un détecteur lumineux, qui peuvent par exemple être placés de part et d'autre du contenant 1. Le contenant 1 comporte trois phases : le premier liquide 2, la phase bi-continue 4, et le deuxième liquide 3. Les moyens de mesure optiques 7 peuvent émettre et recevoir des signaux lumineux (représentés par des flèches en pointillés) en direction du /depuis le premier liquide 2.

La figure 6 illustre l'utilisation du dispositif dans le cas pour lequel le premier liquide 2 comporte des gouttes dispersées 5 du deuxième liquide (cette figure 2 correspond aux temps t₀ et t₁ de la figure 5). Pour cette figure, le moyen de mesure optique 7 détecte les gouttes 5. Par conséquent, on ne réalise pas le soutirage du premier liquide.

La figure 7 illustre l'utilisation du dispositif après phagocytage des gouttes, dans lequel le contenant 1 comporte trois phases : le premier liquide 2, la phase bi-continue 4, et le deuxième liquide 3. Le premier liquide 2 et le deuxième liquide 3 ne comportent aucune goutte : toutes les gouttes ont été phagocytées dans la phase bi-continue 4. Cette figure 7 correspond à la troisième situation (au temps t₂) de la figure 5. Pour cette figure, le moyen de mesure optique 7 ne détecte aucune goutte dans le premier liquide 2. Par conséquent, on peut réaliser le soutirage du premier liquide 2 dépourvu de gouttes 5 du deuxième liquide.

Le procédé de séparation selon l'invention met en œuvre les étapes suivantes :
- On forme un système triphasique dans un contenant, ledit système triphasique comprenant le premier liquide, le deuxième liquide, et une phase bi-continue de type Winsor III, cette phase bi-continue de type Winsor III étant obtenue au moyen d'une formulation tensioactive injectée dans le contenant ;
- On injecte dans le contenant un fluide qui est formé du premier liquide et comportant des gouttes dispersées du deuxième liquide, ainsi au sein du contenant, on a le système triphasique, pour lequel le premier liquide comporte des gouttes dispersées du deuxième liquide ;
- On réalise le phagocytage des gouttes dispersées du deuxième liquide dans la phase bi-continue, pour former une phase du premier liquide dépourvu de gouttes du deuxième liquide ; et
- On soutire le premier liquide dépourvu de gouttes du deuxième liquide.

Préférentiellement, le procédé peut ne pas comporter d'étape d'injection du deuxième liquide ni de la formulation tensioactive lorsque le système triphasique est formé : en fonctionnement, le procédé ne comporte qu'une unique étape d'injection, celle d'un fluide qui comporte le premier liquide et des gouttes dispersées du deuxième liquide.

Avantageusement, le procédé selon l'invention peut mettre en œuvre le dispositif de séparation selon l'une quelconque des variantes ou des combinaisons de variantes décrites précédemment.

Selon un mode de réalisation, après avoir préparé le contenant avec la formulation tensioactive, on peut laisser s'équilibrer les systèmes à température constante pendant une durée prédéterminée, qui dépend des liquides considérés. Ainsi, le système est thermodynamiquement stable avant la mise en œuvre du phagocytage.

Conformément à une mise en œuvre de l'invention, le procédé peut comprendre une étape de mesure optique d'au moins ledit premier liquide au sein du contenant. Les moyens de mesure optique permettent de déterminer la présence de gouttes dispersées dans le premier liquide, et ainsi permettent de s'assurer de réaliser le soutirage du liquide dépourvu de gouttes du deuxième liquide.

Selon un mode de réalisation, le procédé peut mettre en oeuvre des seconds moyens de mesure optique du deuxième liquide au sein du contenant pour déterminer la présence de gouttes dispersées du premier liquide au sein du deuxième liquide. Les moyens de mesure optique peuvent être identiques pour les deux mesures.

Conformément à une mise en œuvre de l'invention, on peut réaliser la mesure optique par analyse de l'intensité lumineuse diffusée par le premier liquide (respectivement le deuxième liquide) dans le contenant. En effet, l'intensité lumineuse diffusée varie de manière importante avec la présence ou l'absence de gouttes dispersées dans le premier liquide (respectivement le deuxième liquide), en particulier lorsque le premier liquide est une phase aqueuse. Selon une option de réalisation de cette mise en œuvre, on peut utiliser la méthode DL (Diffusion de Lumière). Cette méthode DL permet la détection de petites gouttes dispersées. Alternativement, d'autres méthodes peuvent être appliquées, comme la mesure de l'intensité lumineuse absorbée ou transmise.

Selon un mode de réalisation, on peut réaliser l'étape de soutirage du premier liquide dépourvu de gouttes du deuxième liquide seulement lorsque les moyens de mesure optique ne détectent plus aucune goutte du deuxième liquide dans le premier liquide. Ainsi, on s'assure que le phénomène de phagocytage est bien terminé avant le soutirage du premier liquide.

Alternativement, on peut réaliser l'étape de soutirage du premier liquide dépourvu de gouttes du deuxième liquide après une durée prédéterminée après la fin de l'étape d'injection de fluide qui comporte le premier liquide et des gouttes dispersées du deuxième liquide. Cette alternative permet notamment de se passer des moyens de mesure optique, ce qui simplifie l'invention.

De manière avantageuse, les étapes d'injection et/ou de soutirage peuvent être réalisées automatiquement, pour simplifier le procédé de séparation des deux liquides non miscibles.

Selon un mode de réalisation de l'invention, le procédé de séparation peut comporter une étape préalable d'injection dans le contenant d'une formulation tensioactive qui minimise la tension interfaciale entre les deux liquides.

Conformément à une mise en œuvre de l'invention, le contenant peut être plongé dans un bain liquide transparent (selon un exemple non limitatif le bain liquide peut comprendre de l'eau), dont la température est contrôlée. Ainsi, il est possible de régler la température (« thermostater ») du contenu du contenant. De plus, il s'agit d'un moyen simple qui permet de minimiser les gradients de température dans le contenant (meilleure homogénéisation de la température au sein du contenant). En outre, pour le mode de réalisation pour lequel le contenant est en verre, l'interface verre-liquide présente l'avantage de minimiser l'écart d'indice de réfraction, donc de réduire les réflexions et diffusions parasites (notamment pour le cas des contenants usagés), ce qui favorise la mesure optique et par conséquent la détection de la présence de gouttes. Ce mode de réalisation permet en outre d'utiliser des contenants ayant un grade de qualité optique non maximale, ce qui permet de réduire les coûts.

L'invention concerne également l'utilisation du dispositif et/ou du procédé de séparation dans un procédé de traitement d'un effluent pétrolier. On appelle effluent pétrolier, un fluide récupéré par un puits de production dans un procédé de récupération des hydrocarbures d'une formation souterraine. Un effluent pétrolier, comporte généralement de l'huile (hydrocarbures sous forme liquide), du gaz (hydrocarbures sous forme gazeuse) et de l'eau, ainsi qu'au moins une partie d'un fluide balayage injecté dans la formation en vue de la récupération des hydrocarbures.

Le procédé de traitement d'un effluent pétrolier peut comprendre au moins les étapes suivantes :
a) on réalise une séparation des phases de l'effluent pétrolier, pour séparer au moins une phase liquide aqueuse, une phase liquide d'huile, et une phase gaz, cette séparation peut être une séparation gravitaire, par exemple du type « Free-Water Knock-Out ». En sortie de cette étape, le liquide aqueux comporte essentiellement de l'eau, des gouttes d'huile, et au moins un tensioactif.
b) on traite le liquide aqueux issu de la séparation au moyen du dispositif et ou du procédé de séparation selon l'une des caractéristiques décrites précédemment. De cette manière, on améliore la qualité de l'eau.

En outre, l'invention concerne un procédé de récupération assistée des hydrocarbures d'une formation souterraine. Le procédé de récupération assistée des hydrocarbures comprend au moins les étapes suivantes :
a) on injecte un fluide dans la formation souterraine, par un puits injecteur, le fluide injecté comprenant au moins un tensioactif ; le fluide injecté peut comprendre également des polymères;
b) on récupère un effluent pétrolier de la formation souterraine, par un puits producteur, l'effluent pétrolier comprenant au moins une partie du fluide injecté, c'est-à-dire une partie du tensioactif, des polymères;
c) on réalise une séparation des phases de l'effluent pétrolier, pour séparer au moins une phase liquide aqueuse, une phase liquide d'huile et une phase gaz ; cette séparation peut être une séparation gravitaire, par exemple du type « Free-Water Knock-Out ». En sortie de cette étape, le liquide aqueux comporte essentiellement de l'eau, des gouttes d'huile, et au moins un tensioactif; et
d) on traite la phase aqueuse au moyen du dispositif et/ou du procédé tel que décrit précédemment. De cette manière, on améliore la qualité de l'eau.

## Revendications

1. Dispositif de séparation de deux liquides non miscibles, appelés premier liquide (2) et deuxième liquide (3), ledit dispositif comprenant un contenant (1) comportant lesdits premier et deuxième liquides (2, 3), des moyens d'injection d'un fluide (8) qui est formé dudit premier liquide (2) et qui comporte des gouttes dudit deuxième liquide (5), et des moyens de soutirage (9) dudit premier liquide (2) dépourvu de gouttes dudit deuxième liquide, **caractérisé en ce que** ledit contenant comprend un système triphasique, ledit système triphasique comprenant ledit premier liquide (2), ledit deuxième liquide (3) et une phase bicontinue de type Winsor III (4) formée au moyen d'une formulation tensioactive, pour réaliser un phagocytage desdites gouttes (5) dispersées dudit deuxième liquide présentes dans ledit premier liquide (2).

2. Dispositif de séparation selon la revendication 1, dans lequel ledit dispositif de séparation comprend des moyens de mesure optique (7) d'au moins ledit premier liquide (2) au sein dudit contenant (1).

3. Dispositif de séparation selon la revendication 2, dans lequel lesdits moyens de mesure optique (7) réalisent une mesure de l'intensité lumineuse diffusée dans ledit contenant (1).

4. Dispositif de séparation selon l'une des revendications précédentes, dans lequel lesdits moyens d'injection (8) dudit fluide formé dudit premier liquide (2) et desdites gouttes dudit deuxième liquide (5), et lesdits moyens de soutirage (9) dudit premier liquide (2) comportent des vannes.

5. Dispositif de séparation selon la revendication 4, dans lequel ledit dispositif de séparation comprend des moyens de commande desdites vannes.

6. Dispositif de séparation selon l'une des revendications précédentes, dans lequel ledit premier liquide (2) est une phase aqueuse et ledit deuxième liquide (3) est une phase organique.

7. Procédé de séparation de deux liquides non miscibles appelés premier liquide (2) et deuxième liquide (3), **caractérisé en ce qu'**on met en œuvre les étapes suivantes :
a) On forme un système triphasique dans un contenant (1), ledit système triphasique comprenant ledit premier liquide (2), ledit deuxième liquide (3) et une phase bicontinue de type Winsor III (4) formée au moyen d'une formulation tensioactive ;
b) On injecte dans le contenant un fluide qui est formé dudit premier liquide (1) et qui comporte des gouttes dudit deuxième liquide (5) ;
c) On réalise un phagocytage desdites gouttes dudit deuxième liquide (5) dans ladite phase bicontinue (4) ; et
d) On soutire dudit contenant (1) ledit premier liquide (2) dépourvu de gouttes dudit deuxième liquide.

8. Procédé de séparation selon la revendication 7, dans lequel ledit procédé comprend une étape de mesure optique d'au moins ledit premier liquide (2) au sein dudit contenant (1), notamment une mesure optique de l'intensité lumineuse diffusée dans ledit contenant (1).

9. Procédé de séparation selon la revendication 8, dans lequel on soutire ledit premier liquide (2) lorsque ladite mesure optique ne détecte aucune goutte du deuxième liquide (5) dans ledit premier liquide (2).

10. Procédé de séparation selon la revendication 7, dans lequel on soutire ledit premier liquide (2) après une durée prédéterminée après l'étape d'injection.

11. Procédé de séparation selon l'une des revendications 7 à 10, dans lequel on commande automatiquement l'injection dudit fluide qui est formé dudit premier liquide (2) et comportant des gouttes dudit deuxième liquide (5) dans ledit contenant et/ou le soutirage dudit premier liquide (2) dépourvu de goutte du deuxième liquide depuis ledit contenant (1).

12. Procédé de séparation selon l'une des revendications 7 à 11, dans lequel ledit procédé de séparation comporte une étape d'injection dans ledit contenant d'une formulation tensioactive qui minimise la tension interfaciale entre ledit premier liquide et ledit deuxième liquide.

13. Procédé de séparation selon l'une des revendications 7 à 12, dans lequel ledit premier liquide (2) est une phase aqueuse et ledit deuxième liquide (3) est une phase organique.

14. Utilisation du dispositif de séparation selon l'une des revendications 1 à 6 et/ou du procédé de séparation selon l'une des revendications 7 à 13 dans un procédé de traitement d'un effluent pétrolier, ledit effluent pétrolier étant de préférence obtenu par récupération assistée des hydrocarbures.
